# DEMANDE DE BREVET EUROPEEN

(11) **EP 1 798 107 A1**
(43) Date de publication de la demande: **20.06.2007**
(21) Numéro de dépôt: 06464002.2
(22) Date de dépôt: 28.11.2006
(51) Int. Cl.: B60R 1/08

(54) **Les rétroviseurs qui éliminent l'angle mort**

(30) Priorité: 14.12.2005 RO 200501030
(71) Demandeur: Fenghea, Nicolae, Cod. 907105 Romania (RO)
(72) Inventeur: Fenghea, Nicolae, Cod. 907105 Romania (RO)

(57) **Abrégé**

La présente invention se réfère à un type de rétroviseurs, destinés à l'équipement des véhicules, qui éliminent l'angle mort et qui permettent d'observer les roues de l'arrière de la voiture. Il s'agit de trois miroirs rétroviseurs (A,B et C) à l'intérieur et dans les parties latérales ; le rétroviseur intérieur (A) comporte une partie centrale (1a) qui reflète la zone de l'arrière et deux parties situées aux extrémités, qui reflètent les zones latérales et qui éliminent les angles morts ; les rétroviseurs latéraux (B et C), gauche et droit, comportant les parties situées du côté du véhicule, qui reflètent la zone de l'arrière gauche, respectivement la zone de l'arrière droite du véhicule, ainsi que les parties qui reflètent la zone latérale gauche, respectivement droite, tandis que sur la verticale, il y a les parties qui reflètent le côté gauche, respectivement droit du véhicule, ce qui rend visibles les roues arrière du véhicule.

## Description

Cette invention porte sur les rétroviseurs destinés à l'équipement des véhicules et des autres outillages, qui effectuent des dépassements, des changements de direction et la marche arrière. L'utilisation de ces rétroviseurs a pour but d'augmenter la sécurité dans le traffic, par l'élimination de l'angle mort de même que la visualisation des roues arrière en marche.

A présent les automobiles et les autres moyens de transport sont équipés de miroirs rétroviseurs qui ne permettent pas au conducteur d' observer les parties latérales de la voiture à cause de ce qu'on appelle l'angle mort.

Certains rétroviseurs sont équipés d'un second miroir, plus petit, qui facilite l'observation des zones latérales, correspondant à l'angle mort, mais regarder successivement les deux rétroviseurs n'est pas commode pour le conducteur qui ne doit pas perdre de vue la direction. Certains conducteurs sont obligés parfois de tourner la tête pour observer la zone de l'angle mort, ce qui rend difficile le maintien de la direction de l'automobile, en provoquant un stress supplémentaire.

Cette invention se propose de résoudre le problème de la visualisation par le conducteur de toute la zone arrière et latérale du véhicule, en éliminant l'angle mort d'un seul regard dans le rétroviseur intérieur on dans les rétroviseurs extérieurs latéraux. Ce procède élimine également le stress du conducteur : il est mieux informé sur les zones latérales et peut prendre des décisions correctes en ce qui concerne les manoeuvres de dépassement et de changement de direction, ce qui conduit à l'augmentation de la sécurité dans le traffic et à la diminution des accidents routiers.

Grâce à ces rétroviseurs latéraux on peut observer, en marche, les roues arrière et leur état.

L'invention comporte un kit de trois rétroviseurs qui éliminent l'angle mort : le rétroviseur intérieur (A), le rétroviseur latéral gauche (B) et le rétroviseur latéral droit (C).

Dans l'image 1 on peut voir l' emplacement, pour le véhicule (V), des trois rétroviseurs (A), (B), (C), de même que leur position par rapport au conducteur (x).

Pour les véhicules au volant à droite (image 1), on regardera le miroir.

Le rétroviseur intérieur (A), voir l'image 2,comporte trois éléments, mis en évidence (voir l'image 3): la partie centrale (1a), et son rayon de courbure (R1 alpha) ou plat, ce qui représente 40% à 60% du total de sa longueur ; la partie gauche (2a), avec un rayon de courbure (R2 alpha), ayant la tangente égale à la partie centrale (1a), et qui représente 20% à 30% de la longueur totale du rétroviseur ; la partie droite (3a), avec un rayon de courbure (R3 alpha) et ayant la tangente égale à la partie centrale (1a), ce qui représente 20% à 30% de la longueur du rétroviseur. À un angle (alpha), où se retrouve la zone reflétée, de 150 à 180 degrés, grâce aux parties courbées (convexes).

Les angles morts latéraux gauche (B), voir l'image 4, comportent sur l'horizontale, deux parties (1b), avec son rayon de courbure (R1bêta) ou plat, ce qui représente 50% à 70% de la longueur du rétroviseur ; la partie gauche (2b), avec son rayon de courbure (R2 bêta), ayant la même tangente que la partie (1b) et qui représente 30% à 50% de la longueur du rétroviseur. L'angle mort, qui correspond à l'angle (bêta 2) est éliminé par la réflexion dans la partie (2b) de la zone hachurée à gauche du véhicule. Dans la section 'y-y', voir l'image 8, on met en évidence, en bas du rétroviseur latéral gauche (3b), avec son rayon de courbure (R3 bêta), ce qui représente 20% à 40% de la hauteur du rétroviseur et qui a la même tangente que la partie (1b).

Au rétroviseur latéral gauche, sur l'horizontale, à un angle visuel (bêta 0) de 8 à 15 degrés, correspond un angle (bêta) de 79 à 90 degrés où se retrouve la zone reflétée, hachurée, à gauche du véhicule. Au même rétroviseur latéral gauche, sur la verticale, à un angle visuel de 3 à 30 degrés correspond un angle (bêta) de 75 à 90 degrés ou se reflète la roue arrière gauche du véhicule.

Le rétroviseur latéral droit (C), voir l'image 6, comporte deux parties, mises en évidence dans l'image 7 : la partie (1c), avec le rayon de courbure (R1 gamma) ou plat, et qui représente 50% à 70% de la longueur du rétroviseur ; la partie droite (2c), avec le rayon de courbure (R2 gamma), a la même tangente que la partie (1c) et représente 30% à 50% de la longueur du rétroviseur. L'angle mort, qui correspond à l'angle (gamma 2), est éliminé par la réflexion dans la partie (2c) de la zone hachurée sur la partie droite du véhicule. À un angle visuel (gamma 0) de 7 à 14 degrés, sur l'horizontale, correspond un angle (gamma) de 75 à 90 degrés, dans lequel se retrouve la zone reflétée sur le côté droit du véhicule. Sur la verticale du rétroviseur latéral droit (C), à un angle visuel de 3 à 30 degrés, (gamma 0), correspond un angle (gamma) de 75 à 90 degrés, où se reflète la roue arrière droite du véhicule. Dans la section 'z', voir l'image 9, on met en évidence, en bas du rétroviseur latéral droit, la partie (3c), avec un rayon de courbure (R3gama) de 20 à 30 degrés de la hauteur du rétroviseur et ayant la même tangente que la partie (1c).

L'équipement des véhicules avec ce type de rétroviseur qui éliminent l'angle mort, présente l'avantage de l'observation d'un seul regard tant de la zone arrière que des zones latérales du véhicule.

En regardant dans le rétroviseur intérieur (A), le conducteur a instantanément des informations tant sur zone arrière que sur les zones latérales, gauche et droite, en remarquant rapidement la présence d'autres véhicules dans les zones latérales, étant donné que les angles morts sont éliminés.

En regardant dans le rétroviseur latéral gauche (B), le conducteur s'informe sur la zone arrière gauche et latérale gauche en remarquant rapidement la présence d'un autre véhicule dans la zone latérale gauche, étant donné que l'angle mort est éliminé.

En regardant dans le rétroviseur latéral droit (C) le conducteur s'informe sur la zone arrière droite et latérale droite, en remarquant rapidement la présence d'un autre véhicule dans la zone latérale droite, étant donné que l'angle mort est éliminé.

Grâce à l'élimination de l'angle mort, le conducteur s'informe d'un seul regard sur la zone arrière et latérale, il peut redresser son attention à la direction du véhicule, et le stress, provoqué par le manque d'information concernant la zone de l'angle mort, disparaît.

Un autre avantage, outre le fait que pour s'informer sur la zone latérale le conducteur ne doit plus tourner la tête, porte sur un autre aspect : le conducteur peut prendre des décisions en connaissance de cause, en éliminant les situations ou il oublie de s'informer sur la zone latérale, au moment où il veut effectuer des dépassements où procéder au changement de la direction du véhicule.

Dans le cas de la marche arrière, afin de se garer, les rétroviseur latéraux (B) et (C) rendent possible la visualisation des roues arrière, grâce a leur réflexion dans les parties (3b) et(3c), en bas des rétroviseurs latéraux (B).

Il faut mentionner également que, dans les parties (3b) et (3c), en bas des rétroviseurs latéraux (B) respectivement (C), le conducteur peut observer, en marche, l'état des roues arrière du véhicule ; par conséquent il peut prendre la décision d'arrêter le véhicule si une défection apparaît, en évitant ainsi la destruction du pneu ou la possibilité d'un accident.

Il s'ensuit que l'équipement des véhicules de ce type de rétroviseurs qui éliminent l'angle mort conduit à l'augmentation de la sécurité routière et à la diminution des accidents qui pourraient avoir lieu lors de l'exécution de certaines manoeuvres telles : dépassements, changement de la direction du véhicule, marche arrière.

L'image 1 présente le véhicule (V), en marche en avant (S) et la position du conducteur (X). Le véhicule (V) est équipé de trois rétroviseurs : intérieur (A), latéral gauche (B) et latéral droit (C). Le rétroviseur intérieur (A) reflète l'image arrière et latérale, rendue par l'angle (alpha), dont les angles (alpha 2) et (alpha 3) représentent les angles morts éliminés.

Le rétroviseur latéral gauche (B) reflète l'image arrière gauche et latérale gauche, rendue par l'angle (bêta), dont l'angle (bêta 2) représente l'angle mort éliminé. Le rétroviseur latéral droit (C) reflète l'image arrière droite rendue par l'angle (gamma), dont l'angle (gamma 2) représente l'angle mort éliminé.

Dans l'image 2, qui présente le véhicule (V) en marche en avant (S) et le conducteur (X), on peut remarquer l'angle visuel (alpha 0) dans lequel le conducteur saisit le rétroviseur intérieur (A) et l'angle (alpha) qui rendent l'image reflétée dont (alpha 1) représente l'angle qui rend l'image reflétée par le derrière (alfa 2) et qui correspond à l'angle mort éliminé et rend l'image reflétée de la zone hachurée de la partie latérale gauche, tandis que (alpha 3) représente l'angle qui correspond à l'angle mort éliminé et qui rend l'image reflétée de la zone hachurée de la partie latérale droite.

L'image 3 présente le rétroviseur intérieur (A) et ses trois éléments : la partie centrale (1a), avec le rayon de courbure (R1 alpha) ; partie latérale gauche (2a), avec le rayon de courbure (R2 alpha) ; la partie latérale droite (3a), avec le rayon de courbure (R 3 alpha).

L'angle visuel (alpha 0) qui correspond au rétroviseur intérieur se subdivise de la manière suivante : l'angle visuel (alpha 01), qui comprend la partie centrale du rétroviseur (1a) auquel correspond l'angle (alpha 1) qui comprend la zone reflétée de l'arrière du véhicule ; l'angle visuel (alpha 02), qui comprend la partie latérale gauche du rétroviseur, (2a), auquel correspond l'angle (alpha 2), identique à l'angle mort élimine et qui rend l'image reflétée de la zone hachurée de la partie latérale gauche ; l'angle visuel (alpha 03), qui comprend la partie latérale droite du rétroviseur (3a), auquel correspond l'angle (alpha 3), identique à l'angle mort éliminé et qui rend l'image reflétée de la zone hachurée de la partie latérale droite.

L'image 4, le véhicule (V), en marche en avant (S) et le conducteur (X)-présente l'angle visuel (bêta 0) où le conducteur visualise le rétroviseur latéral gauche (B) et l'angle (bêta) qui rend l'image reflétée, dont (bêta 1) représente l'angle qui rend l'image reflétée dans la partie arrière gauche, et (bêta2) représente l'angle identique à l'angle mort éliminé, qui comprend l'image reflétée de la zone hachurée dans la partie latérale gauche.

L'image 5 présente le rétroviseur latéral gauche (B) et ses deux parties, en section horizontale : la partie du côté du véhicule (1b), avec le rayon de courbure (R1 bêta), ou plat et la partie latérale (2b) avec le rayon de courbure (R2 bêta).

L'angle visuel (bêta 0), qui correspond au rétroviseur latéral gauche (B), en section horizontale, se subdivise de la manière suivante : l'angle visuel (bêta 0 1), qui comprend la partie du rétroviseur du côté du véhicule (1b), auquel correspond l'angle (bêta 1), qui rend l'image de la zone arrière gauche ; l'angle visuel (bêta 02), qui comprend la partie latérale du rétroviseur (2b), auquel correspond l'angle (bêta 2) identique à l'angle mort éliminé, qui rend l'image reflétée de la zone hachurée de la partie gauche du véhicule.

L'image 6, le véhicule (V), en marche en avant (S) et le conducteur (X)-présente l'angle (gamma 0) où le conducteur visualise le rétroviseur latéral droit (C) et l'angle (gamma), qui rend l'image reflétée par le côté arrière droit, tandis que (gamma 1) représente l'angle, identique à l'angle mort éliminé, qui rend l'image reflétée de la zone hachurée de la partie latérale droite du véhicule.

L'image 7 présente le rétroviseur latéral droit (C) et les deux parties, en section horizontale : la partie du côté du véhicule (1c), avec le rayon de courbure (R1 gamma) et la partie latérale (2c), avec le rayon de courbure (R2 gamma).

L'angle visuel (gamma 0), qui correspond au rétroviseur latéral droit, en section horizontale, se subdivise de la manière suivante : l'angle visuel (gamma 01), qui comprend la partie du rétroviseur du côté du véhicule (1c), auquel correspond l'angle (gamma 1), qui rend l'image reflétée dans la partie arrière droite ; l'angle visuel (gamma 02), qui comprend la partie latérale du rétroviseur (2c), auquel correspond l'angle (gamma 2), identique à l'angle mort éliminé, qui rend l'image reflétée de la zone hachurée dans la partie latérale droite du véhicule.

L'image 8, qui présente la section 'y-y' du rétroviseur latéral gauche (B), met en évidence en bas de l'image, la partie(3b) avec le rayon (R3 bêta).

L'angle visuel (bêta 0), qui correspond au rétroviseur latéral gauche, en section verticale, se subdivise de la manière suivante : l'angle visuel (bêta 01) qui comprend la partie supérieure (1b), auquel correspond l'angle (bêta'1), qui rend la zone arrière gauche ; l'angle visuel (bêta'03), qui comprend la partie inférieure (en bas du rétroviseur) (3b), auquel correspond l'angle (bêta '3), identique à l'angle mort éliminé , en section verticale, qui rend l'image reflétée de la zone hachurée, où se trouve la roue arrière gauche du véhicule.

L'image 9 présente la section 'z-z' du rétroviseur latéral droit (C) et met en évidence, dans la partie inférieure, la partie (3c) avec le rayon de courbure (R3 gamma).

L'angle visuel (gamma 0), qui correspond, en section verticale au rétroviseur latéral droit, se subdivise de la manière suivante : l'angle visuel (gamma 01), qui comprend la partie supérieure (1c), auquel correspond l'angle (gamma 1), qui rend la zone arrière droite ; l'angle visuel (gamma 0 3), qui comprend la partie inférieure du rétroviseur (3c), auquel correspond l'angle (gamma 3), identique à l'angle mort éliminé, en section verticale, qui rend l'image reflétée de la zone hachurée, où se trouve la roue arrière droite.

Le rétroviseur intérieur (A), voir l'image 3, qui élimine l'angle mort (à gauche et à droite), comporte une partie centrale (1a), qui représente 40% à 60% de la longueur du rétroviseur, ce qui correspond à un angle visuel (alpha 01) de 5 à 10 degrés. La partie centrale (1a) du rétroviseur intérieur comporte une courbure (convexe) avec le rayon (R1 alpha) de 200 mm à + infini (ce qui signifie qu' elle peut être plane). La zone arrière du véhicule, visualisée dans la vitre arrière, est reflétée dans la partie (1a), qui correspond à l' angle (alpha 1) de 10 à 30 degrés. La partie (2a), à gauche du rétroviseur intérieur, a une longueur qui représente 20% à 30% de la longueur du rétroviseur, encadrée dans un angle visuel (alpha 02) de 4 à 6 degrés, avec une courbure(convexe) ayant un rayon de 30 mm à +infini . Le rayon (R2 alpha) peut être constant ou variable. La zone hachurée, dans la partie latérale du véhicule, est reflétée dans la partie gauche (2a), encadrée dans l'angle (alpha 2) de 60 à 75 degrés, qui correspond à l'angle mort éliminé. La partie (3a), à droite du rétroviseur intérieur, ayant une longueur de 20% à 30% de la longueur du rétroviseur, encadrée dans un angle visuel (alpha 03) de 3 à 6 degrés, comporte une courbure (convexe), avec un rayon (R 3 alpha) de 30 mm à+ infini. Le rayon (R 3 alpha) peut être constant ou variable. La zone hachurée, dans la partie latérale droite du véhicule, est reflétée dans la partie droite du rétroviseur (3a), encadrée dans l'angle (alpha 3), de 60 à 70 degrés, qui correspond à l'angle mort éliminé. Les parties de gauche (2a) et de droite (3a) ont les mêmes tangentes que la partie centrale (1a). Pour un angle visuel (alpha 0) de 12 à 21 degrés, le rétroviseur intérieur reflète la zone arrière et les zones latérales, dans un angle (alpha), (alpha=alpha 1+alpha 2+alpha 3), de 150 à 180 degrés. L'élargissement de l'angle (alpha), qui rend la zone reflétée, par rapport à l'angle (alpha 0), se produit dans la mesure où sur les parties courbes l'angle d'incidence, égal à l'angle de réflexion, diminué (vers les extrémités du rétroviseur), ce qui conduit à l'élargissement de l'angle entre la direction de l'incidence et la direction de réflexion.

Le miroir rétroviseur latéral gauche (B), qui élimine l'angle mort (voir l'image 5), comporte la partie située du côté de l'automobile (1b), qui représente 50% à 70% de la longueur du rétroviseur, ce qui correspond a un angle visuel (bêta 01) de 4 à 6 degrés. Cette partie comporte une courbure (convexe), ayant un rayon (R 1 bêta) de 200 mm à+ infini (ce qui signifie qu'elle peut être plane). La zone du côté derrière gauche est reflétée dans la partie (1b), qui comprend l'angle (bêta 1) de 4 à 20 degrés. La partie (2b), située à l'arrière gauche du rétroviseur latéral gauche, ayant une longueur de 30% à 50% de la longueur du rétroviseur, comprise dans un angle visuel (bêta 02), de 3à 6 degrés, comporte une courbure (convexe) avec un rayon (R 2 bêta) de 30 mm à+ infini. Le rayon (R2 bêta) peut être constant ou variable. La zone hachurée, dans la partie latérale gauche du véhicule, est reflétée dans la partie (2b), encadrée dans l'angle (bêta 2) de 69 à 86 degrés, qui correspond à l'angle mort éliminé. Pour un angle visuel (bêta 0), (bêta 0= bêta 01+bêta02), de 7 à 12 degrés, le rétroviseur latéral gauche reflète la zone située du côté arrière gauche et latéral gauche, dans un angle (bêta), (bêta = bêta 1+bêta 2), de 75 à 90 degrés. L'élargissement de l'angle (bêta), qui couvre la zone reflétée, par rapport à l'angle visuel (bêta 0) se produit étant donné que, sur la partie courbé l'angle d'incidence, égal à l'angle de réflexion, diminue, ce qui conduit à l'élargissement entre la direction d'incidence et la direction de réflexion. Le rayon (R 3 bêta) a 30 mm à +infini.

Le rétroviseur latéral droit (C) qui élimine l'angle mort, en section horizontale (voir l'image 7), comporte une partie du côté du véhicule (1c), qui représente 50% à 70% de la longueur du rétroviseur, et qui correspond à l'angle (gamma 01) du regard du conducteur, de 4 à 6 degrés. La partie (1c) du rétroviseur latéral droit comporte une courbure (convexe), avec un rayon (R 1 gamma) de 200 mm à + infini (ce qui signifie qu'il peut être plan). La zone située à l'arrière droite est reflétée dans la partie (1c), comprise dans l'angle (gamma 1) de 4 à 20 degrés. La partie (2c), située à droite du rétroviseur latéral droit, comporte une longueur de 30% à 50% de la longueur du rétroviseur comprise dans un angle visuel (gamma 02) de 3 à 6 degrés et présente une courbure (convexe) avec un rayon (R 2 gamma) de 30 mm à+ infini . Le rayon (R 2 gamma) peut être constant ou variable. La zone hachurée, voir l'image 7, située dans la partie latérale droite du véhicule, est reflétée dans la partie (2c), encadrée dans un angle (gamma 2) de 69 à 86 degrés, qui correspond à l'angle mort éliminé. Pour un angle visuel (gamma 0), (gamma 0= gamma 01+ gamma 02) de 7 à 12 degrés, le rétroviseur latéral droit reflète la zone située à l'arrière droite et latéralement droite, comprise dans l'angle (gamma), (gamma0= gamma 1+gamma 2), de 75 à 90 degrés. L'élargissement de l'angle (gamma) qui comprend la zone reflétée, par rapport à l'angle (gamma 0), se produit étant donné que sur la partie courbée, l'angle d'incidence, égal à l'angle de réflexion, diminue, ce qui conduit à l'élargissement de l'angle entre la direction d'incidence et la direction de réflexion. Le rayon (R 3 gamma) a 30 mm à +infini.

Le support et les dimensions des rétroviseurs sont décidés par le constructeur du véhicule.

Les rétroviseurs qui éliminent l'angle mort ne nécessitent pas d'autres matériaux, par rapport aux rétroviseurs déjà en exploitation.

Le rétroviseur intérieur (A), qui élimine l'angle mort, peut être fabriqué en une seule pièce ou bien en trois pièces (1a), (2a),(3a), attachées au même support.

Le rétroviseur latéral gauche (B) qui élimine l'angle mort, peut être fabriqué en une seule pièce ou bien en trois pièces (1b), (2b) et (3b) attachées au même support.

Le rétroviseur intérieur (C) qui élimine l'angle mort, peut être fabriqué en une seule pièce ou bien en trois pièces (1c),(2c) et(3c) attachées au même support.

Dans les parties courbées, (2a),(3a), (2b) et (2c), les rétroviseurs (A), (B),(C), qui reflètent l'angle mort éliminé se produit une diminution des dimensions, des véhicules reflétés, qui se trouvent dans l'angle mort, mais cette diminution n'affecte en rien la capacité du conducteur d'observer la présence de ces véhicules, étant donné que celle-ci se trouve à une distance réduite (en dessous de 10 m) par rapport à votre véhicule, équipé de rétroviseurs qui éliminent l'angle mort.

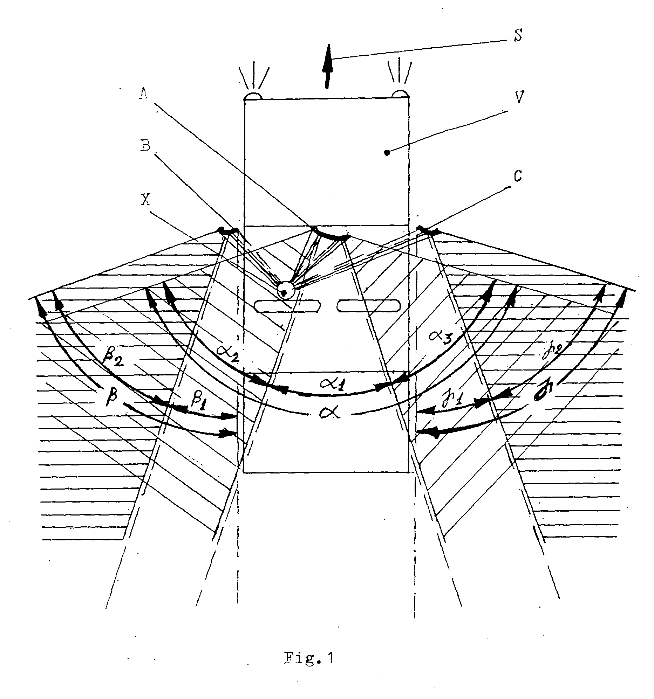

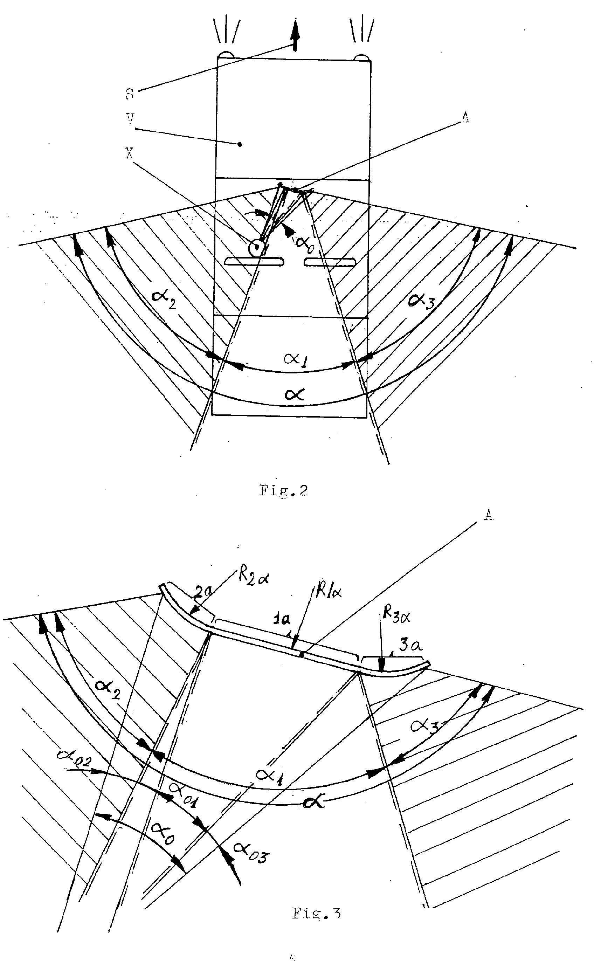

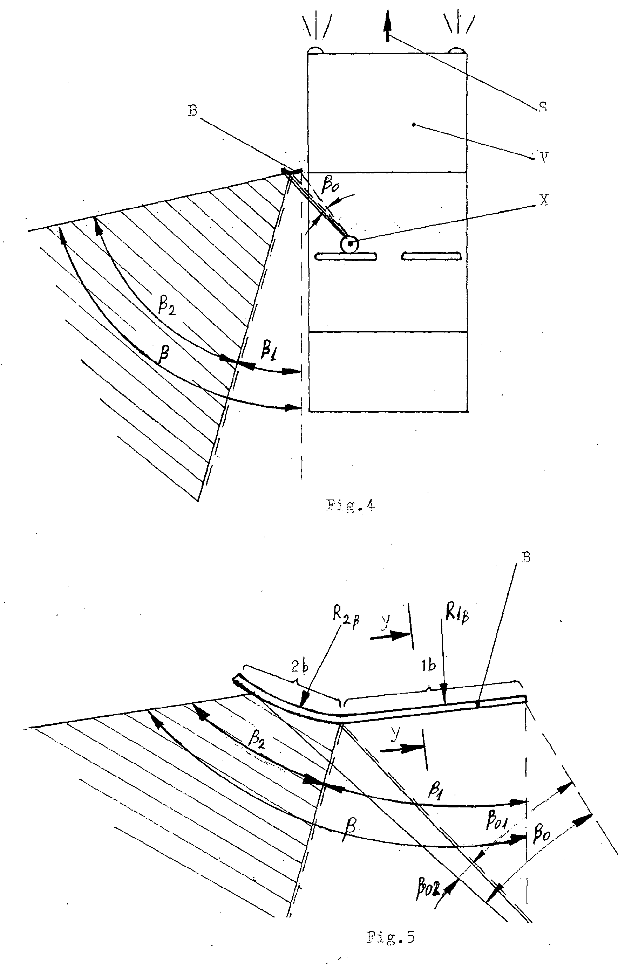

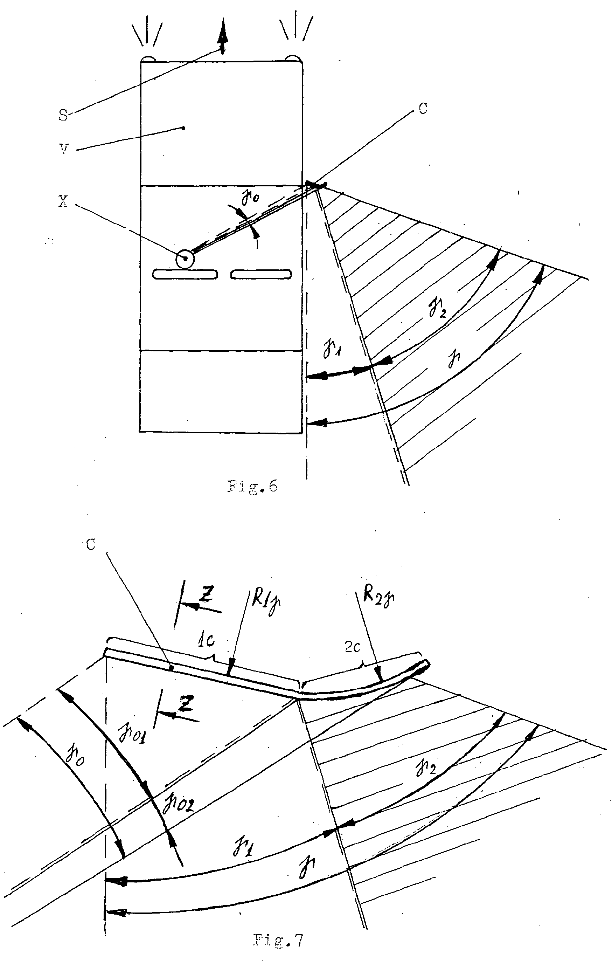

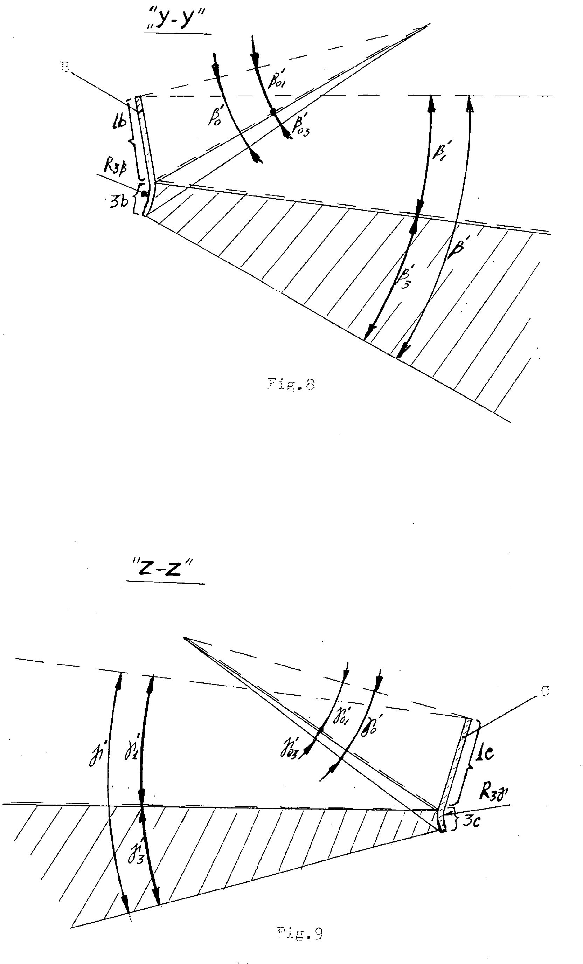

## Revendications

1. Le rétroviseur intérieur (A), qui élimine l'angle mort, comportant trois parties qui ont la même tangente, la partie centrale (1a), qui représente 40 % à 60% de la longueur du rétroviseur, avec un rayon de courbure (R 1 alpha) de 200 mm à +infini; la partie gauche (2a) qui représente 20% à 30% de la longueur de la rétroviseur, avec un rayon de courbure (R 2 alpha) de 30 mm à + infini, ainsi que la partie droite (3a), qui représente 20% à 30% de la longueur du rétroviseur, avec un rayon de courbure (R 3 alpha) de 30 mm à + infini. La caractéristique principale de ce rétroviseur est de rendre visible, d'un seul regard, tant l'observation de la zone arrière du véhicule, dans sa partie centrale (1a), que les zones latérales ; dans la partie (2a) se reflète la zone latérale gauche, tandis que dans la partie (3a) se reflète la zone latérale droite.

2. Le rétroviseur intérieur (A), qui élimine l'angle mort, comportant trois parties qui ont la même tangente, la partie centrale (1a), avec le rayon (R 1 alpha), la partie gauche (2a), avec le rayon (R 2 alpha) et la partie droite (3a), avec le rayon (R 3 alpha), a pour caractéristique principale le fait que ses rayons de courbure (R 1 alpha), (R 2 alpha) et (R 3 alpha) peuvent être constantes ou variables.

3. Le rétroviseur latéral gauche (B), qui élimine l'angle mort, ayant deux parties sur l'horizontale avec la même tangente, la partie du côté du véhicule (1b), qui représente 50% à 70% de la longueur du rétroviseur, avec un rayon de courbure (R 1 bêta) de 200 mm à +infini et la partie gauche (2b), qui représente 30% à 50% de la longueur du rétroviseur, avec un rayon de courbure (R 2 bêta) de 30 mm à +infini , a pour caractéristique principale la possibilité de rendre observable d'un seul regard tant la zone arrière du véhicule, dans la partie (1b), que la zone latérale gauche de véhicule, dans la partie (2b) du rétroviseur.

4. Le rétroviseur latéral gauche (B), qui élimine l'angle mort et qui présente dans sa partie inférieure le segment courbé (3b), qui représente 20% à 30% de la hauteur du rétroviseur, avec un segment courbé et rayon de courbure (R 3 bêta) de 30 mm à +infini , ayant la même tangente que la partie (1b), a pour caractéristique principale de refléter, dans sa partie inférieure (3b), la zone inférieure gauche arrière du véhicule, ce qui rend possible, en marche, tant l'observation de la roue gauche arrière que la roue gauche pendant l'exécution de la marche arrière.

5. Le rétroviseur latéral gauche (B), qui élimine l'angle mort et rend possible l'observation de la roue de gauche arrière, ayant trois parties courbes (convexes) et la même tangente, la partie du côté du véhicule (1b), avec le rayon (R 1 bêta), la partie gauche (2b) avec le rayon (R 2 bêta), et la partie inférieure (3b), avec le rayon (R 3 bêta), et qui présentent un segment sphérique reliant ces parties, a pour caractéristique le fait que ses rayons de courbure (R 1 bêta), (R 2 bêta) et (R 3 bêta) peuvent être constantes ou variables.

6. Le rétroviseur latéral droit (C), qui élimine l'angle mort, comportant sur l'horizontale deux parties , avec la même tangente, la partie du côté du véhicule (1c), qui représente 50% à 70% de la longueur du rétroviseur, avec un rayon de courbure (R 1 gamma) de 200 mm à +infini, et la partie droite (2c), qui représente 30% à 50% de la longueur du rétroviseur, avec un rayon de courbure (R 2 gamma) de 30 mm à +infini , a pour cracteristique principale de rendre observable tant la zone arrière droite du véhicule, dans la partie (1c), que la zone latérale droite du véhicule, dans la partie (2c).

7. Le rétroviseur latéral droit, qui élimine l'angle mort, comportant dans sa partie inférieure le segment courbé (3c), qui représente 20% à 30% de la hauteur du rétroviseur, avec un rayon de courbure (R 3 gamma) de 30 mm à +infini, et la même tangente que la partie (1c), a pour caractéristique de refléter dans la partie (3c) la zone droite arrière du véhicule, ce qui rend observables, tant la roue de droite arrière en marche, que l'insertion de la roue de droite arrière pendant la marche arrière, par rapport à la bordure de chaussée ou à l'autres marquages.

8. Le rétroviseur latéral droit (C), qui élimine l'angle mort et rend observable la roue arrière droite, comportant trois parties courbes (convexes), qui ont la même tangente, la partie du côté du véhicule (1c) avec un rayon (R 1 gamma), la partie droite (2c), avec un rayon (R 2 gamma), et la partie inférieure (3c), avec un rayon (R3 gamma), et un segment sphérique reliant les parties (2c) et (3c), a pour caractéristique le fait que ses rayons de courbures (R 1 gamma), (R 2 gamma) et (R 3 gamma) peuvent être constants ou variables.

9. Les rétroviseurs (A), (B),(C), qui éliminent l'angle mort, et qui comportent trois parties, le rétroviseur intérieur avec les parties (1a), (2a) et (3a), le rétroviseur latéral gauche, avec les parties (1b), (2b) et (3b) et le rétroviseur latéral gauche avec les parties (1c), (2c) et (3c), ont pour caractéristique qu'ils peuvent être fabriqués en une seule pièce ou en trois pièces attachées à un support.
